# EUROPÄISCHE PATENTSCHRIFT

(11) **EP 0 810 938 B1**
(45) Veröffentlichungstag und Bekanntmachung des Hinweises auf die Patenterteilung: **21.11.2001**
(21) Anmeldenummer: 96929195.4
(22) Anmeldetag: 01.08.1996
(51) Int. Cl.: B60T 13/68, B60T 8/36

(54) **ELEKTROMAGNETVENTIL, INSBESONDERE FÜR SCHLUPFGEREGELTE KRAFTFAHRZEUGBREMSANLAGEN**
ELECTROMAGNETIC VALVE, ESPECIALLY FOR ANTI-LOCKING MOTOR VEHICLE BRAKING SYSTEMS
ELECTROVANNE, EN PARTICULIER POUR SYSTEME DE FREINAGE A ANTIBLOCAGE POUR VEHICLES A MOTEUR

(30) Priorität: 15.09.1995 DE 19534227
(43) Veröffentlichungstag der Anmeldung: 10.12.1997
(73) Patentinhaber: Continental Teves AG & Co. oHG, 60488 Frankfurt (DE)
(72) Erfinder: KRIEG, Bernd, D-63633 Birstein (DE)
(86) Internationale Anmeldenummer: EP9603390
(87) Internationale Veröffentlichungsnummer: WO9710135

(56) Entgegenhaltungen:
- WO-A-92/18362

## Beschreibung

Die Erfindung bezieht sich auf ein Elektromagnetventil, insbesondere für schlupfgeregelte Kraftfahrzeugbremsanlagen nach dem Oberbegriff des Anspruchs 1.

Bei einem bekannten Elektromagnetventil dieser Art (DE 35 29 134 A1) erfolgt beim Übergang des Ankers in die eine oder andere Endlage eine Dämpfung der Anschlaggeräusche mittels eines am Magnetanker angeordneten hydraulischen Dämpferkolbens, der einen Dämpferraum im Ventilgehäuse in zwei Kammern unterteilt. Der Dämpferkolben ist in beiden Bewegungsrichtungen wirksam, sofern Druckmittel aus der einen Kammer in die weitere Kammer über den Ringspalt am Dämpferkolben gedrosselt überströmen kann. Zusätzlich ist vorgeschlagen, im Dämpferkolben ein Rückschlagventil anzuordnen, das abhängig von seiner Öffnungsrichtung die Dämpfung in die eine oder andere Ankerbewegungsrichtung gezielt beeinflußt. Die hydraulische Dämpfung dieser Art ist infolge der Viskositätsabhängigkeit schwankend, so daß sich bei Temperaturveränderungen oder beim Einsatz des Ventils für unterschiedliche Betriebsmedien die Ventilschaltzeiten und die Schaltgeräusche verändern. Überdies ist der bauliche Aufwand des Ventils für den Praxiseinsatz unangemessen hoch.

Aus der DE 43 44 440 A1 ist bereits ein Elektromagnetventil der gattungsbildenden Art bekannt geworden, das zwischen dem Außenumfang des Magnetankers und dem Innenumfang des Ventilgehäuses ein Dichtelement aufweist. Richtungsabhängig wird die Bewegung des Magnetankers gedämpft, da bei der Öffnungsbewegung des am Magnetanker angebrachten Schließkörpers das zwischen dem Dichtelement und im Hohlraum des Magnetankers eingespannte Druckmittelvolumen ausschließlich über eine Blende in Richtung der im Ventilaufnahmekörper angeordneten Druckmittelkanäle verdrängt werden kann. Da sich mit der Größe des gewählten Blendenquerschnitts zwangsläufig auch eine Abhängigkeit der Durchflußrate von der Betriebstemperatur einstellt, sind mit der vorgeschlagenen Festblende keine konstanten Ventilschaltzeiten über einen größeren Temperaturbereich möglich.

Der Erfindung liegt die Aufgabe zugrunde, die aus dem vorgenannten Stand der Technik hervorgegangenen Elektromagnetventile so auszubilden und zu vereinfachen, daß unabhängig von Temperatur- und Viskositätsschwankungen gleichbleibende Ventilschaltzeiten erzielt werden, sowie die bei der Betätigung des Elektromagnetventils auftretenden Geräusche auf ein möglichst niedriges und konstantes Maß zu reduzieren.

Erfindungsgemäß ist diese Aufgabe durch die kennzeichnenden Merkmale des Patentanspruchs 1 gelöst.

Bei dieser Ausbildung wird die Magnetankerbewegung hydraulisch durch das im Druckmittelraum innerhalb des Magnetankers eingespannte Druckmittelvolumen und reibungsbehaftet durch das am Ventilgehäuse angepreßte Dichtelement richtungsabhängig gedämpft, wodurch Ventilgeräusche vor allem bei der Öffnungsbewegung des Ventilschließgliedes gemindert sind. Die Wirkung des Dichtelementes zusammen mit einem temperaturgesteuerten Blendenquerschnitt ermöglicht konstante Schaltgeschwindigkeiten, so daß keine nachteilige Schaltverzögerung des Magnetventils im Tieftemperaturbetrieb auftritt. Durch die gedämpfte Öffnungsbewegung des Schließkörpers läßt sich der Volumenstrom innerhalb des Magnetventils fein regulieren bis der Magnetanker am Ventilgehäuse in der vollständig geöffneten Ventilstellung hydraulisch gedämpft anliegt. Das durch die Öffnungsbewegung des Ventilkörpers im Magnetanker verdrängte Druckmittelvolumen trägt schließlich auch zu einer Erhöhung der Anpreßkraft auf die Dichtlippe des Dichtelementes bei, was der Dämpferwirkung förderlich ist.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand zweier Zeichnungen näher dargestellt und erläutert werden.

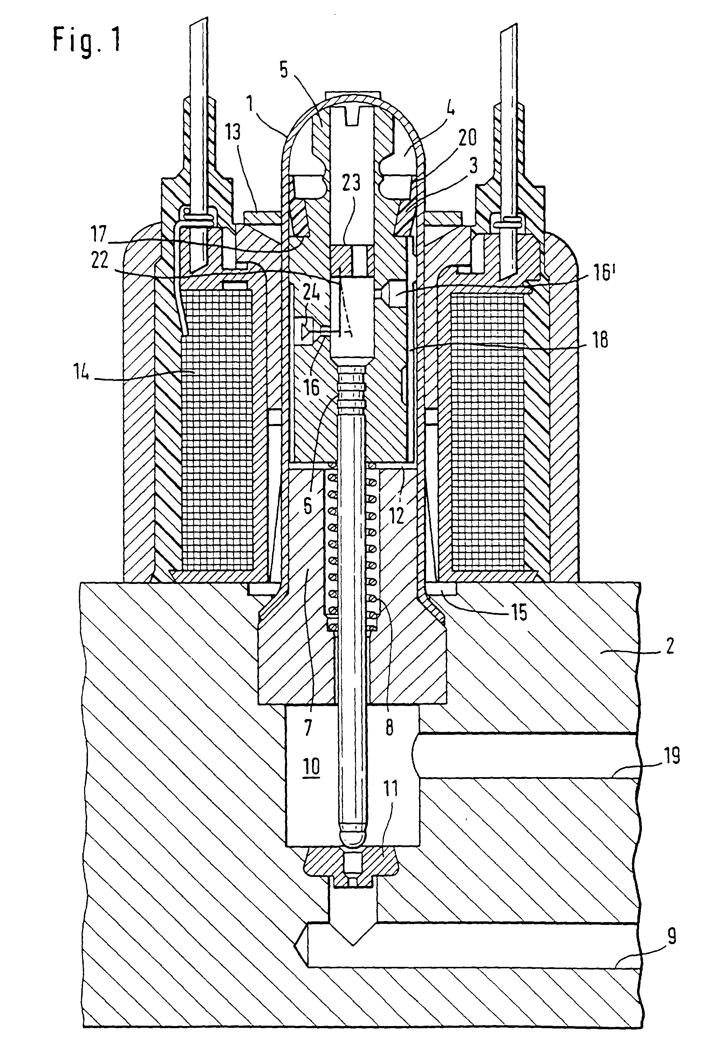

Die Figur 1 zeigt einen Querschnitt durch ein in der Grundstellung elektromagnetisch stromlos geöffnetes Magnetventil mit einer speziellen Ausgestaltung des Ventilgehäuses 1 als Ventilhülse im Ventilaufnahmekörper 2. Das Elektromagnetventil ist in einer erheblich vergrößerten Darstellung gezeigt. Das Ventilgehäuse 1 besteht aus einem hülsenförmigen, nur wenige Millimeter abmessenden Teil. Der Ventilaufnahmekörper 2 besteht aus einer Stahllegierung. Das als Ventilhülse ausgeführte Ventilgehäuse 1 wird aus unmagnetischem, rostfreiem Stahl durch ein Tiefziehverfahren hergestellt. Das Ventilgehäuse 1 nimmt im Hohlraum des Magnetankers 5 eine als Schließkörper wirksame Ventilnadel 6 auf. Die Ventilnadel 6 durchdringt den Magnetkern 7 konzentrisch. In einer abgesetzten Bohrung (Längsbohrung) des Magnetkerns 7 befindet sich in koaxialer Anordnung gegenüber dem Magnetanker 5 eine Druckfeder 8, die über die Ventilnadel 6 gestülpt an der Stirnfläche des Magnetankers 5 anliegt. Im Bereich des in den Ventilaufnahmekörper 2 eingelassenen Druckmittel-Einlaßkanals 9 ist innerhalb einer im Ventilaufnahmekörper 2 abgesetzten Gehäusebohrung 10 der Ventilsitz 11 mittels einer Verstemmung gehalten. Weiterhin ist die Magnetspule 14 am Ventildom des Ventilgehäuses 1 mittels eines Greifrings 13 gesichert.

Das Tiefziehverfahren zur Fertigung der Ventilhülse (Ventilgehäuse 1) führt insbesondere bei Verwendung von rostfreiem Stahl zu einer Kaltverfestigung, so daß unter Wahrung eines von der Dünnwandigkeit der Ventilhülse abhängigen Wirkungsgrades des Magnetkreises, ein hochdruckbeständiges Ventilgehäuse 1 hergestellt ist. Da bei Verwendung des Elektromagnetventils für hydraulische Bremsanlagen der Innenraum der Ventilhülse vom Hochdruck vollkommen beaufschlagt wird, erweist sich die vorbeschriebene Herstellungs- und Befestigungsweise der Ventilhülse als äußerst vorteilhaft. Der Innenraum des Ventilgehäuses 1 ist durch ein am abbildungsgemäßen oberen Endabschnitt des Magnetankers 5 angebrachtes Dichtelement 3 in zwei Druckmittelräume 4, 12 unterteilt, die über zwei wirkungsmäßig unabhängig voneinander im Magnetanker 5 angeordnete Blenden 16,16' hydraulisch miteinander in Verbindung stehen. Die Blende 16' ist unterhalb des Dichtelementes 3 als Festblende mit konstantem Querschnitt seitlich in den Magnetanker 5 eingebracht, so daß ihre Blendenbohrung senkrecht zur Magnetankerachse mit dem Druckmittelraum 4 eine permanente Druckmittel-Verbindung herstellt. Die Blende 16 ist gleichfalls wie die Blende 16' seitlich in die Wandung des Magnetankers 5 eingebracht. Die Blende 16 ist mittels eines als Sitzventil 24 gestalteten Körpers in ihrem Durchlaßquerschnitt veränderbar, womit sich ein zur Blende 16' (Festblende) im Querschnitt variable Zusatzblende ergibt, die voneinander wirkungsmäßig unabhängig sind. Das Sitzventil 24 weist einen Ventilkegel auf, der an der Kegelsitz- fläche der Blende 16 anlegbar ist. Zur temperaturabhängigen Steuerung des Blendenquerschnitts befindet sich innerhalb einer Längsbohrung des Magnetankers 5 ein Bimetall 22, das durch ein zylinderförmiges Halteteil 23 im Magnetanker 5 fixiert ist. Das Bimetall 22 ist mittels eines Stifts mit dem Ventilkegel verbunden, so daß in vorgeschlagenen Ausführungsbeispiel das Bimetall 22 mit dem Sitzventil 24 das erfindungsgemäße Mittel bildet, welches temperaturabhängig den Blendenquerschnitt variiert. Die Verwendung eines Sitzventiles 24 ist als eine von vielen Ausführungsmöglichkeiten anzusehen, da bei Wunsch oder Bedarf das Mittel 21 auch nach dem Prinzip eines Schieberventils oder eines Drehschiebers ausgeführt werden kann, sofern es die Bauraumverhältnisse zulassen. Durch die vorgeschlagene senkrechte Anordnung des Bimetalls 22 in der Längsbohrung ist das Bimetall frei von unerwünschter Schwingungsanregung, die aus der Betätigung des Elektromagnetventils herrühren kann. Die abbildungsgemäße offene Darstellung der variablen Blende 16 entspricht einem Betrieb des Elektromagentventils im Tieftemperaturenbetrieb, da es infolge der erheblichen Viskositätszunahme großer Blendenablaufquerschnitte bedarf, um während der Öffnungsbewegung des Elektromagnetventils das Druckmittelvolumen aus dem Druckraum 4 in Richtung des Druckmittelauslaßkanals 19 möglichst widerstandsarm verdrängen zu können. Im abbildungsgemäßen Ausführungsbeispiel bildet das zungenförmige Bimetall 22 mit dem hohlzylinderförmigen Halteteil 23 eine Baueinheit, die in die Längsbohrung des Magnetankers 5 soweit eingepreßt wird, bis das freie Ende des Bimetalls 22 in Überdeckung mit der variablen Blende 16 gelangt. Der mit dem Stift verbundene Sitzkegel des Sitzventils 24 wird sodann radial von außen in die Blende 16 eingeschoben, bis der Stift mittels einer form- und/oder kraftschlüssigen Verbindung mit dem freien Ende des Bimetalls 22 im Eingriff steht. Bei der vorgeschlagenen Konstruktion ist zu beachten, daß der Durchlaß im Halteteil 23 wenigstens so groß wie die Summe der beiden Blendenquerschnitte 16,16' bemessen wird, um den Strömungswiderstand möglichst klein zu halten.

Das Dichtelement 3 weist die Form einer Ringmanschette auf, die die Funktion eines Rückschlagventils inne hat. Der Magnetanker 5 ist zur Befestigung des Dichtelementes 3 mit einem Bund 17 versehen, der in Richtung der Ventilnadel 6 eine kegelförmige Einschnürung aufweist. Der kegelförmige Abschnitt des Magnetankers 5 sorgt für den sicheren Sitz des Dichtelementes 3. Damit begrenzt das Dichtelement 3 entlang der Wandung des Ventildoms den sich bis in die Längsbohrung des Magnetankers erstreckenden Druckmittelraum 4, sowie den sich entlang der Längsnut 18 erstreckende äußere Druckmittelraum 12. Über die den Magnetanker 5 radial durchdringende Bohrungen der Blenden 16,16' ist der sich bis in die Gehäusebohrung 10 erstreckende Druckmittelraum 12 mit dem Druckmittelraum 4 verbunden. Der Magnetanker 5 weist hierzu entlang seiner Außenkontur die Längsnut 18 auf.

Um unter Einwirkung höchster Betriebsdrücke die Befestigung der Ventilhülse (Ventilgehäuse 1) innerhalb des Ventilaufnahmekörpers 2 sicherzustellen, ist die Mantelfläche der Ventilhülse in ihrem kegelförmigen Bereich zwischen den Kontaktflächen des Magnetkerns 7 und des Ventilaufnahmekörpers 2 reibschlüssig und ggf. auch formschlüssig befestigt. Dies geschieht durch das Einstemmen einer ringförmig umlaufenden Nase 15 am Ventilaufnahmekörper 2, wodurch eine Anpassung der dünnwandigen Ventilhülse an die Oberflächenkontur des in den Ventilaufnahmekörper 2 eingesetzten Magnetkerns 7 vorliegt. Bei Einwirkung erhöhter Schubkräfte - infolge erhöhter Innendrücke - verhindert die Verstemmung einerseits das Austreten von Flüssigkeit und andererseits ein etwaiges Herausschlüpfen der Ventilhülse aus der Befestigung.

Im nachfolgenden ist die Wirkungsweise der Erfindung nach Fig. 1 erläutert.

In der abbildungsgemäßen Darstellung stellt die in Offenposition befindliche Ventilnadel 6 eine hydraulische Verbindung zwischen dem Druckmitteleinlaßkanal 9 und dem Druckmittelauslaßkanal 19 her. Im speziellen Anwendungsfall für eine schlupfgeregelte hydraulische Bremsanlage schließt sich am Druckmitteleinlaßkanal 9 die Druckmittelversorgung, das heißt der Bremsdruckgeber bzw. die Hilfsdruckquelle an, während am Druckmittelauslaßkanal 19 der Verbraucher, das heißt die Radbremse angeschlossen ist. Der Magnetanker 5 ist elektromagnetisch nicht erregt, so daß die zwischen dem Magnetkern 7 und dem Magnetanker 5 angeordnete Druckfeder 8 den Magnetanker 5 am Ventildom auf Anschlag hält. Das in der Gehäusebohrung 10 anstehende Druckmittel gelangt gleichzeitig über den außerhalb des Magnetankers 5 gelegenen Druckmittelraum 12, über die Längsnuten 18 bis zu den Blenden 16,16' bzw. zum Dichtelement 3, so daß auch der im Magnetanker 5 gelegene Druckmittelraum 4 mit dem Druck in der Gehäusebohrung 10 beaufschlagt ist. Zu beachten ist hierbei, daß die variable Blende 16 nur bei niedrigen Temperaturen geöffnet ist, während die Blende 16' (Festblende) einen permanenten Durchlaß ermöglicht.

Bei einer elektromagnetischen Erregung des Ventils bewegt sich der Magnetanker 5 abwärts in Richtung des Magnetkerns 7, womit sich der Druckmittelraum 4 im Ventildom vergrößert und die Dichtlippe 20 des als Ringmanschette ausgebildeten Dichtelementes 3 nur unter einer vernachlässigbar kleinen Vorspannkraft entlang der Innenwandung des Ventilgehäuses 1 axial mitbewegt wird. Die Reibkräfte am Dichtelement 3 sind entsprechend gering, so daß die Ventilschließbewegung nicht behindert wird.

Sobald die Magnetspule 14 nicht mehr vom elektrischen Strom durchflossen ist, kehrt sich die Bewegungsrichtung des Magnetankers 5 um, so daß bei der Öffnungsbewegung der Ventilnadel 6 das im Druckmittelraum 4 des Ventildoms eingespannte Fluid abhängig vom Volumendurchsatz der Blenden 16,16' verzögert in Richtung des außerhalb des Magnetankers 5 gelegenen Druckraums 12 verdrängt werden kann, wobei auch die Dichtlippe 20 durch den hydraulischen Vordruck im Ventildom vollflächig dichtend an die Innenwandung der Ventilhülse (Ventilgehäuse 1) gepreßt wird und damit die Öffnungsbewegung im gewünschten Umfange verzögert. Folglich wird die konstante Öffnungsgeschwindigkeit der Ventilnadel 6 im wesentlichen durch die Funktion der Blenden 16,16' und die hiervon mitbeeinflußte Manschettenreibung am Ventilgehäuse 1 bestimmt. Durch die Verwendung der Blende 16 mit veränderbarem Blendenquerschnitt ist der hydraulische Widerstand auch bei niedriger Temperatur gut beherrschbar, so daß der Einfluß von Temperatur- bzw. Viscositätsänderungen auf die Öffnungsgeschwindigkeit der Ventilnadel keinen nennenswerten Einfluß haben.

Hierdurch ergibt sich beispielsweise bei einer Temperatur von -20° Celsius ein weitgehend ungehinderter Durchlaß der Blende 16, da durch die Verformung des Bimetalls 23 der Ventilkegel vom Sitzkegel der Blende 16 abgehoben ist. Das aus dem Druckmittelraum 4 während der Öffnungsbewegung des Elektromagnetventils verdrängte Druckmittelvolumen gelangt somit über die beiden Blenden 16,16' verzweigt zum Druckmittelauslaßkanal 19. Trotz Zunahme der Viskosität im vorbeschriebenen sinkenden Temperaturbereich gelangt somit der Magnetanker 5 mit konstanter Hubgeschwindigkeit und nahezu konstanter Dämpfungsrate in seine obere Endlage auf Anschlag am Ventilgehäuse 1. Die als Zusatzblende wirksame Blende 16 ist somit durch ihre Parallelanordnung zur als Festblende wirksamen Blende 16' in Abhängigkeit der temperaturabhängigen Viskositätsänderung des Druckmittels wirksam. Beim vorgeschlagenen Ausführungsbeispiel handelt es sich gewissermaßen um eine indirekte Betätigung des zu öffnenden bzw. zu verschließenden Blendenquerschnitts mittels einer speziellen Ventilbauform. Die strichlinierte Krümmung des Bimetalls 22 zeigt andeutungsweise die Schließstellung des Sitzventils 24 beim Ansteigen der Temperatur (z.B. +20 Grad Celsius), wodurch ausschließlich der Blendenquerschnitt der Blende 16' wirksam ist.

Insbesondere bei der Verwendung des Erfindungsgegenstandes für schlupfgeregelte Bremsanlagen, ergibt sich durch die gezielte Dämpfung des Ventilöffnungshubes eine besonders fein dosierbare Bremsdruckregelung sowie eine Reduzierung des Magnetankeranschlaggeräusches am Ventildom in der Endlage. Wegen des relativ kleinen Ankerhubs ist das Dichtelement 3 ausreichend steif zu gestalten, um die Verformung des Dichtelementes bei Volumenänderung im Druckraum 4 möglichst klein zu halten. Als günstiger Werkstoff für das Dichtelement eignet sich die Verwendung von Teflon (eingetragenes Warenzeichen), das die gewünschte Verschleißfestigkeit und Gleiteigenschaft aufweist. Das Dichtelement 3 ist nicht an die Ausführung als Rückschlagmanschette gebunden, sondern kann auch als O-ring oder 4-Kant-Profilring ausgeführt sein.

Insbesondere bei den bereits erwähnten schlupfgeregelten hydraulischen Bremsanlagen kommt bei der Verwendung von in der Grundstellung elektromagnetisch stromlos offenen geschalteten Elektromagnetventilen (sogenannte stromlos offene Einlaßventile) der Reduzierung von Schaltgeräuschen eine besondere Bedeutung zu, da die hydraulische Druckdifferenz am Einlaßventil, das heißt zwischen Bremsdruckverbraucher und Bremsdruckversorgung erheblich größer ist als beim elektromagnetisch stromlos geschlossen Magnetventil (sogenanntes stromlos geschlossene Auslaßventil), bei dem der Verbraucherdruck (Bremsdruck) gegen näherungsweise Atmosphärendruck abgelassen wird. Überdies wird bei steigender Druckdifferenz am Einlaßventil und unter Beibehaltung einer konstanten Einschaltdauer des Erregerstroms (Pulslänge) die Ventilöffnungszeit länger, was zu großen Druckschwankungen und damit bei Ventilen herkömmlicher Bauart zur Geräuschzunahme führt.

Die Erfindung ist jedoch nicht auf das erläuterte Anwendungsbeispiel beschränkt und kann daher auch bei Bedarf für elektromagnetisch stromlos geschlossene Ventile zur Anwendung gelangen. Die Verwendung der Rückschlagventilfunktion des Dichtelementes in der einen oder anderen Hubrichtung des Magnetankers bleibt hierbei aufgrund den vorangegangenen Anregungen der Erfindung dem Fachmann zur Erzielung der gewünschten Wirkung freigestellt, so daß weitere Ausführungsbeispiele hierzu denkbar sind.

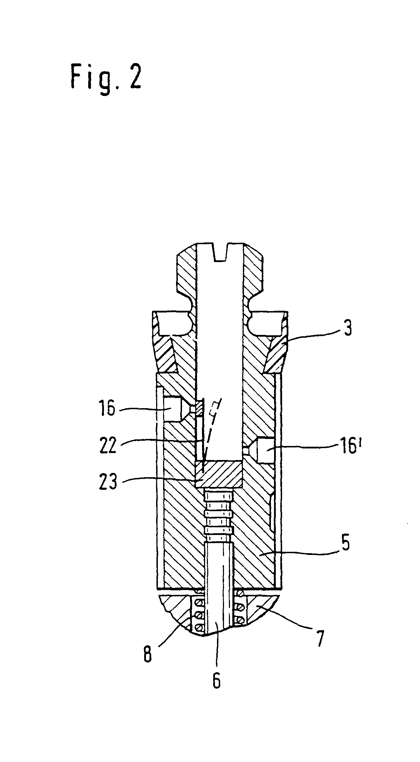

Hinsichtlich einer besonders einfachen konstruktiven Ausführungsform der Erfindung wird auf Fig. 2 hingewiesen. In Figur 2 besteht das den Blendenquerschnitt variierende Mittel 22 analog zu Fig. 1 im wesentlichen aus einem zungenförmigen Bimetall 22, das an einem zylinderförmigen Halteteil 23 befestigt ist. Der Unterschied und besondere Vorteil gegenüber Fig. 1 ist in Fig. 2 daran zu erkennen, daß das Mittel 22 als vormontierte Einheit bis an den Absatz der Längsbohrung im Magnetanker 5 eingepreßt werden kann, ohne das es besondere Justiermaßnahmen zur Ausrichtung des Blendenschließkörpers am Bimetall 22 zur Durchlaßbohrung der Blende 16 bedarf. Das Bimetall 22 selbst als auch ein als spezieller Dichtkörper auf das Bimetall aufgeschobene oder durch Kleben oder Löten angebrachter Schließkörper (Sitzventil 24) verschließen bei hoher Betriebstemperatur die Blende 16 in der Längsbohrung derart, daß in Form einer Flachdichtung eine relativ einfache Abdeckung der Blende 16 möglich ist. Mit sinkender Temperatur des Fluids (z.B. -20° Celsius) entfernt sich das Bimetall 22 entsprechend der strichlinierten Darstellung von der Innenwandung der Längsbohrung, so daß nicht nur ein Durchfluß an der Blende 16' sondern auch an der Blende 16 gewährleistet ist. Soweit nicht alle notwendigen Ventilbauteile in Fig. 2 gezeigt sind, so entsprechen diese den Ventilbauteilen nach Fig. 1.

Zusammenfassend ist festzustellen, daß durch die vorgeschlagenen Erfindung die Magnetankerbewegung nahezu unabhängig von allzu großen Temperaturschwankungen mit möglichst konstanter Dämpfungsrate erfolgen kann, so daß die Ventilschaltzeiten als auch der Aufschlagimpuls des Magnetankers am Gehäuse günstig beeinflußt wird. Dies greift auf das Prinzip zurück, daß mittels eines temperaturgesteuerten, veränderbaren Blendenquerschnitts bei sinkender Temperatur (Viskositätszunahme der Flüssigkeit) der Blendenquerschnitt vergrößert wird. Hierzu eignen sich im besonderen die Bimetalle, die eine Zusatzblende im Magnetanker öffnen, sobald sich das Elektromagnetventil im Tieftemperaturbetrieb befindet. Diese Zusatzfunktion läßt sich funtionell besonders günstig in Parallelschaltung zu einer bereits vorhandenen Festblende verwirklichen, wobei sowohl die Festblende als auch die bimetallgesteuerte Zusatzblende bezüglich der Einhaltung konstanter Ventilschaltzeiten und damit Dämpfungseigenschaften aufeinander abzustimmen sind. Bimetalle eignen sich zur direkten und indirekten Betätigung des zu steuernden Blendenquerschnitts. Die indirekte Betätigung kann prinzipiell unter Verwendung von Sitz- oder Schieberventilfunktionen als auch durch Verwendung von Drehschiebern erfolgen. Eine besonders kostengünstige Ausführung der Erfindung ergibt sich durch eine direkte Betätigung des zu steuernden Querschnitts, indem das vorzugsweise als Zunge ausgeführte Bimetall 22 unmittelbar an der Blende 16 zur Anlage kommt, wobei gegebenenfalls der die Blendenbohrung kontaktierende Abschnitt des Bimetalls 22 kostengünstig mit einer Flachdichtung versehen werden kann.

### Bezugszeichenliste

- 1: Ventilgehäuse
- 2: ventilaufnahmekörper
- 3: Dichtelement
- 4: Druckmittelraum
- 5: Magnetanker
- 6: Ventilnadel
- 7: Magnetkern
- 8: Druckfeder
- 9: Druckmitteleinlaßkanal
- 10: Gehäusebohrung
- 11: Ventilsitz
- 12: Druckmittelraum
- 13: Greifring
- 14: Magnetspule
- 15: Nase
- 16: Blende
- 16': Blende
- 17: Bund
- 18: Längsnut
- 19: Druckmittelauslaßkanal
- 20: Dichtlippe
- 22: Bimetall
- 23: Halteteil
- 24: Sitzventil

## Patentansprüche

1. Elektromagnetventil, insbesondere für schlupfgeregelte hydraulische Bremsanlagen, mit einem Ventilgehäuse (1), das mehrere die Funktion des Elektromagnetventils bestimmte Ventilbauteile, wie ein am Magnetanker (5) angebrachter Schließkörper und einen Magnetkern (7) aufweisen, wobei der Schließkörper gegenüber einem Ventilsitz (11) sowie der Magnetanker (5) gegenüber dem Magnetkern (7) beweglich geführt sind, sowie mit einer die Betätigung des Magnetankers (5) beeinflussenden Magnetspule (14), um mittels des Schließkörpers die Druckmittelverbindung zwischen wenigstens einem Druckmitteleinlaßkanal (9) und einem Druckmittelauslaßkanal (19) im Ventil zu sperren oder zu öffnen, wobei zwischen dem Außenumfang des Magnetankers (5) und dem Innenumfang des Ventilgehäuses (1) ein Dichtelement (3) angeordnet ist, das einen Raum zwischen dem Außenumfang des Magnetankers (5) und dem Innenumfang des Ventilgehäuses (1) in einen Raum, der mit einem sich innerhalb des Magnetankers (5) erstreckenden Druckmittelraum (4) in Verbindung steht, und einem außerhalb des Magnetankers (5) gelegenen Druckmittelraum (12) aufteilt, wobei in Parallelschaltung zum Dichtelement (3) eine Blende (16) im Magnetanker (5) angeordnet ist, **dadurch gekennzeichnet, daß** die Blende (16) wenigstens ein Mittel (22) aufweist, welches temperaturabhängig den Blendenquerschnitt variiert, wobei die Blende (16) bei abnehmender Temperatur einen offenen Blendenquerschnitt für eine Druckmittelverbindung zwischen dem sich innerhalb des Magnetankers (5) erstreckenden Druckmittelraum (4) und dem außerhalb des Magnetankers(5) gelegenen Druckmittelraum (12) aufweist, und daß bei zunehmender Temperatur der Blendenquerschnitt in seiner Öffnung verkleinert oder verschlossen ist.

2. Elektromagnetventil nach Anspruch 1, **dadurch gekennzeichnet, daß** das Mittel ein Bimetall (22) aufweist.

3. Elektromagnetventil nach Anspruch 1 oder 2, **dadurch gekennzeichnet, daß** das Mittel (22) unmittelbar in eine Längsbohrung im Magnetanker (5) eingesetzt ist.

4. Elektromagnetventil nach Anspruch 1, **dadurch gekennzeichnet, daß** das Mittel (22) ein Sitz- oder Schieber- oder Drehschieberventil aufweist.

5. Elektromagnetventil nach Anspruch 1, **dadurch gekennzeichnet, daß** eine Blende (16') im Magnetanker (5) angeordnet ist, die einen konstanten Blendenquerschnitt aufweist, die eine permanente Druckmittelverbindung zwischen dem sich innerhalb des Magnetankers (5) erstreckenden Druckmittelraum (4) und einem außerhalb des Magnetankers (5) gelegenen Druckmittelraum (12) herstellt.

6. Elektromagnetventil nach Anspruch 5, **dadurch gekennzeichnet, daß** die als Festblende wirksame Blende (16') wirkungsmäßig parallel zur Blende (16) mit variablem Blendenquerschnitt geschaltet ist.

7. Elektromagnetventil nach Anspruch 2, **dadurch gekennzeichnet, daß** das Bimetall (22) senkrecht in eine Längsbohrung des Magnetankers (5) gerichtet ist, die mit dem Druckmittelraum (4) in Verbindung steht.

8. Elektromagnetventil nach Anspruch 7, **dadurch gekennzeichnet, daß** das Bimetall (22) mittels eines in der Längsbohrung des Magnetankers (5) fixierten Halteteils (23) mit der Blende (16) in Überdeckung bringbar ist.

## Claims

1. Electromagnetic valve, in particular for slip-controlled hydraulic brake systems, with a valve housing (1) which includes several valve components destined for the functioning of the electromagnetic valve such as a closure member fitted to a magnetic armature (5) and a magnetic core (7), wherein the closure member is guided so as to be movable relative to a valve seat (11) and the magnetic armature (5) is guided so as to be movable relative to the magnetic core (7), and with a magnet coil (14) which influences the actuation of the magnetic armature (5) in order to close or open the pressure fluid connection between at least one pressure fluid inlet channel (9) and one pressure fluid outlet channel (19) in the valve by means of the closure member, wherein a sealing element (3) is arranged between the outside periphery of the magnetic armature (5) and the inside periphery of the valve housing (1) and subdivides a space between the outside periphery of the magnetic armature (5) and the inside periphery of the valve housing (1) into a chamber which is in connection to the pressure fluid chamber (4) that extends within the magnetic armature (5) and a pressure fluid chamber (12) disposed outside the magnetic armature (5), with an orifice (16) being arranged in the magnetic armature (5) in a parallel connection to the sealing element (3),
**characterized in that** the orifice (16) includes at least one means (22) which varies the cross-section of the orifice in response to temperature, with the said orifice (16) with decreasing temperature having an open orifice cross-section for a pressure fluid connection between the pressure fluid chamber (4) that extends within the magnetic armature (5) and the pressure fluid chamber (12) that is disposed outside the magnetic armature (5), and **in that** with increasing temperature the orifice cross-section in its opening is decreased or closed.

2. Electromagnetic valve as claimed in claim 1,
**characterized in that** the means has a bimetallic element (22).

3. Electromagnetic valve as claimed in claim 1 or 2,
**characterized in that** the means (22) is inserted directly into a longitudinal bore in the magnetic armature (5).

4. Electromagnetic valve as claimed in claim 1,
**characterized in that** the means (22) includes a seat valve, or slide valve, or rotary-spool valve.

5. Electromagnetic valve as claimed in claim 1,
**characterized in that** an orifice (16') is arranged in the magnetic armature (5) which has a constant orifice cross-section providing a permanent pressure fluid connection between the pressure fluid chamber (4) that extends inside the magnetic armature (5) and a pressure fluid chamber (12) disposed outside the magnetic armature (5).

6. Electromagnetic valve as claimed in claim 5,
**characterized in that** the orifice (16') which acts as an invariable orifice is connected in parallel to the orifice (16) with a variable orifice cross-section in terms of effect.

7. Electromagnetic valve as claimed in claim 2,
**characterized in that** the bimetallic element (22) is directed vertically into a longitudinal bore of the magnetic armature (5) which is in connection with the pressure fluid chamber (4).

8. Electromagnetic valve as claimed in claim 7,
**characterized in that** the bimetallic element (22) can be moved to overlap the orifice (16) by means of a retaining element (23) fixed in the longitudinal bore of the magnetic armature (5).

## Revendications

1. Soupape électromagnétique, notamment pour des installations de freinage hydrauliques à régulation du glissement, comportant un boîtier de soupape (1) qui possède plusieurs composants de soupape destinés à faire fonctionner la soupape électromagnétique, comme par exemple un corps de fermeture monté sur une armature magnétique (5), et un noyau magnétique (7), le corps de fermeture étant déplaçable en étant guidé par rapport à un siège de soupape (11) et l'armature magnétique (5) étant déplaçable en étant guidée par rapport au noyau magnétique (7), et comportant une bobine magnétique (14) qui influe sur l'actionnement de l'armature magnétique (5) de manière à bloquer ou ouvrir, dans la soupape, au moyen du corps de fermeture, la liaison d'un fluide sous pression entre au moins un canal (9) d'entrée du fluide sous pression et un canal (19) de sortie du fluide sous pression, et dans laquelle entre la périphérie extérieure de l'armature magnétique (5) et la périphérie intérieure du boîtier de soupape (1) est disposé un élément d'étanchéité (3) qui divise un espace présent entre la périphérie extérieure de l'armature magnétique (5) et la périphérie intérieure du boîtier de soupape (1) en une chambre qui est reliée à une chambre (4) du fluide sous pression qui s'étend à l'intérieur de l'armature magnétique (5), et en une chambre (12) pour le fluide sous pression, qui est disposée à l'extérieur de l'armature magnétique (5), un diaphragme (16) étant disposé dans l'armature magnétique (5) en étant montée en parallèle avec l'élément d'étanchéité (3), **caractérisée en ce que** le diaphragme (16) comporte au moins un moyen (22) qui modifie la section transversale du diaphragme en fonction de la température, le diaphragme (16) possédant, lorsque la température diminue, une section transversale ouverte pour une liaison du fluide sous pression entre la chambre (4) du fluide sous pression qui s'étend à l'intérieur de l'armature magnétique (5), et la chambre (12) du fluide sous pression qui est disposée à l'extérieur de l'armature magnétique (5), et **en ce que** lorsque la température augmente, l'ouverture de la section transversale du diaphragme est réduite ou fermée.

2. Soupape électromagnétique selon la revendication 1, **caractérisée en ce que** le moyen comporte un élément bimétallique (22).

3. Soupape électromagnétique selon la revendication 1 ou 2, **caractérisée en ce que** le moyen (22) est inséré directement dans un perçage longitudinal formé dans l'armature magnétique (5).

4. Soupape électromagnétique selon la revendication 1, **caractérisée en ce que** le moyen (22) possède une soupape à siège ou une soupape à tiroir ou une soupape à tiroir rotatif.

5. Soupape électromagnétique selon la revendication 1, **caractérisée en ce que** dans l'armature magnétique (5) est disposé un diaphragme (16') qui possède une section transversale constante et qui établit une liaison permanente de transmission de fluide sous pression entre la chambre (4) de fluide sous pression qui s'étend à l'intérieur de l'armature magnétique (5), et une chambre (12) du fluide sous pression qui est disposée à l'extérieur de l'armature magnétique (5).

6. Soupape électromagnétique selon la revendication 5, **caractérisée en ce que** le diaphragme (16') qui agit en tant que diaphragme fixe, est monté, du point de vue de son action, en parallèle avec le diaphragme (16) ayant une section transversale variable.

7. Soupape électromagnétique selon la revendication 2, **caractérisée en ce que** l'élément bimétallique (22) est dirigé perpendiculairement dans un perçage longitudinal de l'armature magnétique (5) qui est relié à la chambre (4) du fluide sous pression.

8. Soupape électromagnétique selon la revendication 7, **caractérisée en ce que** l'élément bimétallique (22) peut être amené en recouvrement avec le diaphragme (16) à l'aide d'une partie de retenue (23) fixée dans le perçage longitudinal de l'armature magnétique (5).
